(19) Europäisches Patentamt
European Patent Office
Office européen des brevets

(11) **EP 2 808 747 A1**

(12) **EUROPÄISCHE PATENTANMELDUNG**

(43) Veröffentlichungstag:
**03.12.2014 Patentblatt 2014/49**

(51) Int Cl.:
*G05B 15/02* (2006.01)    *H02J 1/10* (2006.01)

(21) Anmeldenummer: **13169303.8**

(22) Anmeldetag: **27.05.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Cyron, Michael**
 **76187 Karlsruhe (DE)**
• **Kort, Valentin**
 **76829 Landau (DE)**

(54) **Automatisierungsgerät mit parallel geschalteten Quellenmodulen**

(57)    Die Erfindung betrifft ein Automatisierungsgerät mit an eine Versorgungsleitung (P1, P2) angeschlossenen Senkenmodulen (9, 10, 11, ... N) und mit mindestens zwei parallel geschalteten Quellenmodulen (4, 5, 6) zur Versorgung der Senkenmodule (9, 10, 11, ... N) mit elektrischer Energie, wobei jedes der mindestens zwei Quellenmodule zur Beaufschlagung der Versorgungsleitung (P1, P2) mit einer Ausgangsspannung vorgesehen ist, wobei ferner die mindestens zwei Quellenmodule (4, 5, 6) Mittel zur Symmetrierung eines auf eine Nennleistung des jeweiligen Quellenmoduls (4, 5, 6) bezogenen prozentualen Auslastungsgrades (L) aufweisen, und eines der mindestens zwei Quellenmodule (4, 5, 6) für eine höhere Leistungsabgabe und das andere der mindestens zwei Quellenmodule (4, 5, 6) für eine niedrigere Leistungsabgabe vorgesehen ist. Es werden Maßnahmen vorgeschlagen, mittels welcher während des Hochlaufs des Automatisierungsgerätes ein Einbrechen der Versorgungsspannung aufgrund eines Lastsprungs weitgehend vermieden wird.

FIG 2

**Beschreibung**

Die Erfindung betrifft ein Automatisierungsgerät mit an eine Versorgungsleitung angeschlossenen Senkenmodulen und mit mindestens zwei parallel geschalteten Quellenmodulen zur Versorgung der Senkenmodule mit elektrischer Energie, wobei jedes der mindestens zwei Quellenmodule zur Beaufschlagung der Versorgungsleitung (P1, P2) mit einer Ausgangsspannung vorgesehen ist, wobei ferner die mindestens zwei Quellenmodule Mittel zur Symmetrierung eines auf eine Nennleistung des jeweiligen Quellenmoduls bezogenen prozentualen Auslastungsgrades aufweisen, und eines der mindestens zwei Quellenmodule für eine höhere Leistungsabgabe und das andere der mindestens zwei Quellenmodule für eine niedrigere Leistungsabgabe vorgesehen ist.

Häufig sind parallel geschaltete Quellenmodule bzw. Stromversorgungen jeweils mit Lastverteilungs-Controllern (so genannten Loadshare-Controllern) versehen, welche dazu vorgesehen sind, die prozentuale Auslastung der Stromversorgungen zu symmetrieren. Für den Fall, dass sich die Leistungsabgabe einer der Stromversorgungen des Automatisierungsgerätes erhöht, z. B. weil eine weitere Baugruppe bzw. ein weiteres Senkenmodul diesem Automatisierungsgerät hinzugefügt wird oder eine bereits vorhandene Baugruppe von einem STOPP- in einen RUN-Betrieb schaltet, führt dies kurzzeitig zu einer unsymmetrischen Lastverteilung; denn die genannten Controller bewerkstelligen aufgrund einer geringen Regelfrequenz von gewöhnlich 10 Hz nicht unverzüglich eine auf die jeweilige Nennleistung bezogene symmetrische Lastverteilung, z. B. in der Art, dass jede der Stromversorgungen 80 % oder 100 % ihrer Nennleistung zur Versorgung des Automatisierungsgerätes mit elektrischer Energie abgibt.

In den Lastverteilungs-Controllern ist jeweils eine Kennlinie hinterlegt, welche einen auf die Nennleistung des jeweiligen Quellenmoduls bezogenen prozentualen Auslastungsgrad dieses Quellenmoduls in Abhängigkeit einer an diesem Bus (Loadshare-Bus) anliegenden Spannung (Loadshare-Spannung) repräsentiert. Beispielsweise weist eine 5 V-Loadshare-Spannung darauf hin, dass zwei Quellenmodule jeweils zu 50% ausgelastet sind, wobei ein 60 W-Quellenmodul in diesem Fall 30 W und ein 40 W-Quellenmodul 20 W - also eine Gesamtleistung von 50 W - den an eine Versorgungsleitung angeschlossenen Senkenmodulen bereitstellen. Unabhängig von der Nennleistung des jeweiligen Quellenmoduls stimmt der prozentuale Auslastungsgrad aller Quellenmodule überein, wobei die Quellenmodule die Versorgungsleitung gewöhnlich mit einer 15 V-Versorgungsspannung beaufschlagen.

Aufgrund von Bauteiltoleranzen liefern diese für 15 V-Versorgungsspannung ausgelegten Quellenmodule gewöhnlich nicht exakt die geforderte Versorgungsspannung, sondern beaufschlagen die Versorgungsleitung mit einer Spannung zwischen 14,7 V bis 15,2 V. Für den Fall, dass ein für niedrige Leistungsabgaben ausgebildetes 10 W-Quellenmodul 15,2 V, dagegen ein für höhere Leistungsabgaben ausgebildetes 60 W-Quellenmodul 15,0 V erzeugt, versorgt während des Hochlaufs eines Automatisierungsgerätes, während dessen die Senkenmodule zeitlich verzögert mittels eines Aktivierungssignals einer CPU des Automatisierungsgerätes aktiviert werden, zunächst zu einem ersten Zeitpunkt das für niedrige Leistungsabgaben ausgebildete 10 W-Quellenmodul die gerade aktivierten Senkenmodule. Das für höhere Leistungsabgaben ausgebildete 60 W-Quellenmodul bleibt dagegen zunächst in einem Sleep-Modus bzw. in einem Standby-Betrieb, weil dessen DC/DC-Wandler erkennt, dass diese Senkenmodule mit einer ausreichenden Spannung von 15,2 V beaufschlagt sind. Aufgrund der zu diesem ersten Zeitpunkt geringen Last und des dadurch geringen Laststroms können die Lastverteilungs-Controller beider Quellenmodule nicht sicherstellen, die jeweils auf die Nennleistung bezogene Lastverteilung zu symmetrieren, um zu bewirken, dass jedes der beiden Quellenmodule prozentual gleich ausgelastet ist. Für den Fall, dass zu einem dem ersten Zeitpunkt folgenden zweiten Zeitpunkt ein großer Lastsprung erfolgt, weil die Leistungsaufnahme der Senkenmodule größer als die Leistungsabgabe des 10 W-Quellenmoduls ist, bricht kurzzeitig die Versorgungsspannung ein; denn der Lastverteilungs-Controller und insbesondere der Schaltregler des für die höhere Leistungsabgabe ausgebildeten 60 W-Quellenmoduls brauchen eine gewisse "Ansprechzeit", um den Sleep-Modus zunächst zu verlassen und schließlich zusammen mit dem für die niedrige Leistungsabgabe ausgebildeten 10 W-Quellenmodul die erforderliche Leistung bereitzustellen.

Der Erfindung liegt daher die Aufgabe zugrunde, ein Automatisierungsgerät der eingangs genannten Art zu schaffen, welches insbesondere während dessen Hochlaufs ein Einbrechen der Versorgungsspannung aufgrund eines Lastsprungs weitgehend vermeidet.

Diese Aufgabe wird dadurch gelöst, dass das für die höhere Leistungsabgabe vorgesehene Quellenmodul eine größere Ausgangsspannung bereitstellt als das für die niedrigere Leistungsabgabe vorgesehene Quellenmodul.

Die Erfindung geht von der Idee aus, sicherzustellen, dass ein für eine höhere Leistungsabgabe ausgebildetes Quellenmodul stets als "Master" betrieben wird, was bedeutet, dass dieses Quellenmodul während des Hochlaufs des Automatisierungsgerätes nicht im Sleep- bzw. Standby-Betrieb arbeitet. Um dies zu erreichen, ist dieses Quellenmodul dazu ausgebildet, eine Ausgangsspannung zu erzeugen, die größer ist als die eines für eine geringere Leistungsabgabe ausgebildeten Quellenmoduls. Für den Fall, dass für die Senkenmodule beispielsweise eine 15 V-Versorgungsspannung bereitzustellen ist, erzeugt das für eine höhere Leistungsabgabe ausgebildete Quellenmodul eine Spannung von 15,2 V. Das bedeutet, dieses Quellenmodul beaufschlagt die Versorgungsleitung mit einer Spannung von 15,2 V anstatt der 15 V-Versorgungsspannung. Dadurch, dass während des Hochlaufs das für eine höhere Leistungsabgabe ausgebildete Quellenmodul nicht im Sleep- bzw. Standby-Betrieb arbeitet, kann dieses Quellenmodul einen Lastsprung im Wesentlichen "abfangen"; ein Einbrechen der Ausgangsspannung wird weitgehend verhindert und es ist sichergestellt, dass alle Senkenmodule weitgehend "ohne Probleme" aktiviert werden können und das Automatisierungsgerät störungsfrei hochlaufen kann.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

> Figur 1 eine Kennlinie eines Lastverteilungs-Controllers einer Stromversorgung bzw. eines Quellenmoduls,
> Figur 2 ein Prinzipschaltbild von Bestandteilen eines Automatisierungsgerätes und
> Figur 3 Bestandteile eines DC/DC-Wandlers.

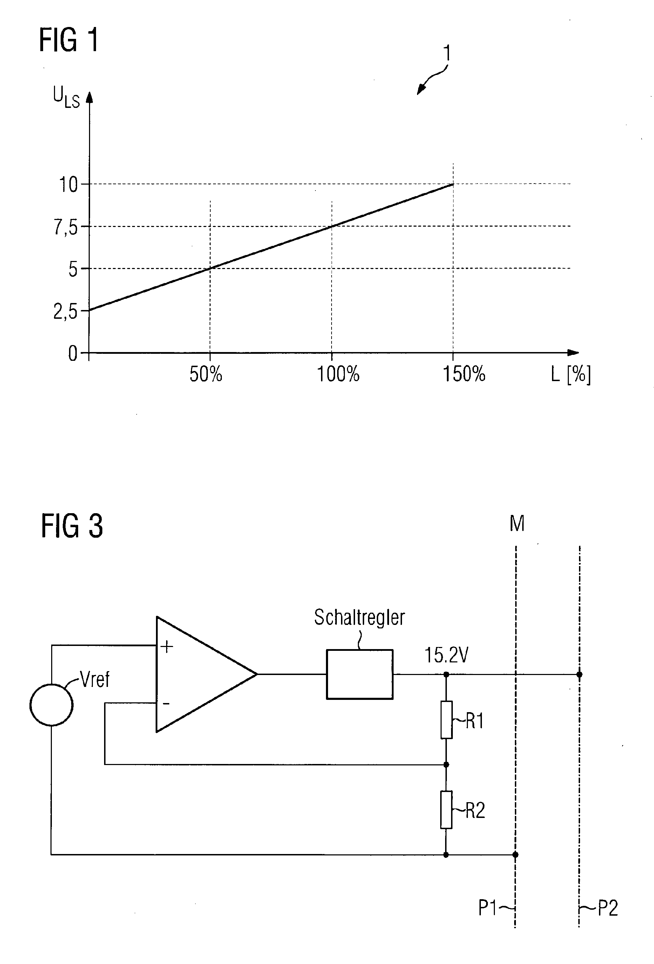

In Figur 1 ist mit 1 eine Kennlinie eines Lastverteilungs-Controllers bezeichnet, welche einen auf die Nennleistung eines Quellenmoduls bezogenen prozentualen Auslastungsgrad L des Quellenmoduls in Abhängigkeit einer an einem so genannten Loadshare-Bus (LS-Bus) anliegenden Loadshare-Spannung $U_{LS}$ darstellt. Der prozentuale Auslastungsgrad L des Quellenmoduls ergibt sich zu:

$$L = \frac{aktuelle\ Leistungsabgabe}{Nennleistung} \times 100\ \%$$

Die Loadshare-Spannung $U_{LS}$ wird während des Betriebs von dem Lastverteilungs-Controller des Quellenmoduls an diesem LS-Bus erfasst, an welchen weitere Lastverteilungs-Controller von weiteren Quellenmodulen eines Automatisierungsgerätes angeschlossen sind. In jedem dieser Lastverteilungs-Controller ist eine derartige Kennlinie 1 hinterlegt. Für den Fall, dass eine Spannung $U_{LS}$ von 5 V erfasst wird, erkennen diese jeweiligen Controller mittels der Kennlinie 1, dass die an eine Versorgungsleitung des Automatisierungsgerätes angeschlossenen Quellenmodule zu 50 % ausgelastet sind. Der prozentuale Auslastungsgrad L des Automatisierungsgerätes im Hinblick auf die Gesamt-Leistungsabgabe dieser Quellenmodule kann einfach aus dem prozentualen Auslastungsgrad L eines der angeschlossenen Quellenmodule abgeleitet werden, weil der prozentuale Auslastungsgrad L des Automatisierungsgerätes dem aller angeschlossenen Quellenmodule entspricht.

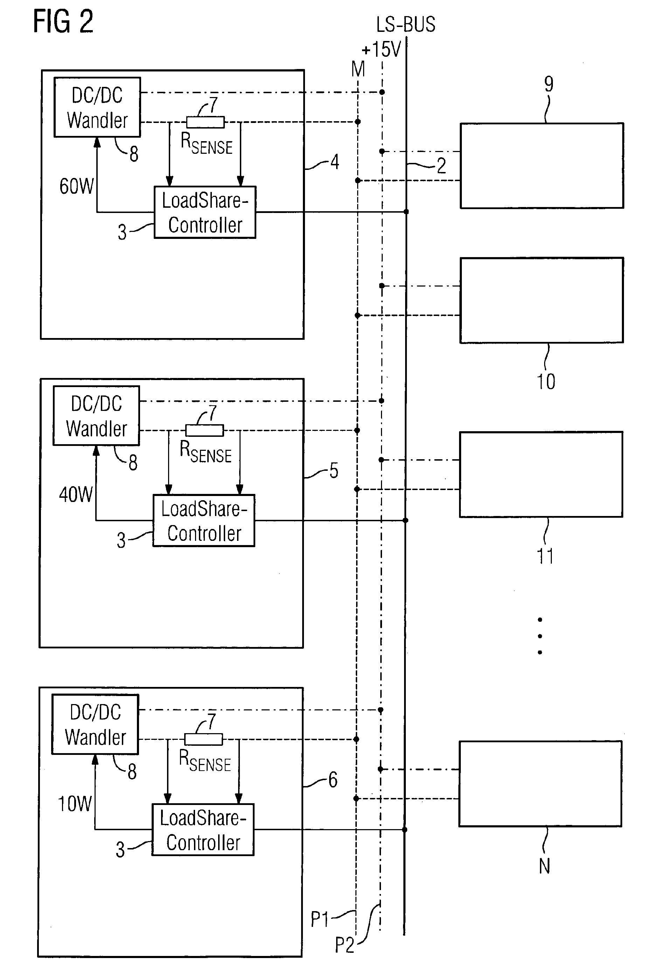

Im Folgenden wird dazu auf Figur 2 verwiesen, in der ein Prinzipschaltbild von Bestandteilen eines Automatisierungsgerätes dargestellt ist.

An einen LS-Bus 2 sind Lastverteilungs-Controller 3 von Quellenmodulen 4, 5, 6 angeschlossen, von denen eines dieser Quellenmodule als CPU-Modul des Automatisierungsgerätes ausgebildet sein kann. Die Quellenmodule 4, 5, 6 sind zur Versorgung der an eine Versorgungsleitung in Form von Potentialleitungen P1, P2 angeschlossen Senkenmodule 9, 10, 11, ... N mit elektrischer Energie vorgesehen. Diese Senkenmodule 9, 10, 11, ... N sind beispielsweise als analoge oder als digitale Ein-/Ausgabebaugruppen ausgebildet. In jedem der Lastverteilungs-Controller 3 ist die Kennlinie 1 (Figur 1) hinterlegt.

Es wird im Folgenden angenommen, dass das Automatisierungsgerät eingeschaltet wird und dass ferner das Quellenmodul 4 für eine Nennleistung von 60 W, das Quellenmodul 5 für eine Nennleistung von 40 W und das Quellenmodul 6 für eine Nennleistung von 10 W ausgelegt ist, wobei die jeweiligen Quellenmodule ferner dazu ausgelegt sind, die Senkenmodule 9, 10, 11, ... N kurzzeitig mit der 1,5-fachen Nennleistung zu versorgen.

Nach dem Einschalten des Automatisierungsgerätes werden lediglich die für den Betrieb der Quellenmodule 4, 5, 6 erforderlichen Schaltungs- bzw. Bestandteile sowie eine hier nicht dargestellte CPU-Einheit mit einer geeigneten Spannung versorgt.

Für den Fall, dass z. B. ein DC/DC-Wandler 8 des für eine niedrige Leistungsabgabe ausgebildeten 10 W-Quellenmoduls 6 als erstes erkennt, dass keine Spannung an den Potentialleitungen P1, P2 anliegt, beaufschlagt das Quellenmodul 6 diese Potentialleitungen P1, P2 zur Energieversorgung mit einer Versorgungsspannung von z. B. 15,2 V, wobei die Quellenmodule 4, 5 im Sleep-Modus verbleiben, weil deren DC/DC-Wandler 8 die Versorgungsspannung von 15,2 V an den Potentialleitungen P1, P2 identifiziert, allerdings selbst nur 15 V erzeugen "müssen".

Mittels eines hier nicht dargestellten Aktivierungs- bzw. Freigabesignals, das die CPU-Einheit den Senkenmodulen 9, 10, 11, ... N über eine hier nicht dargestellte Steuerleitung während des Hochlaufs zuführt, werden diese Senkenmodule 9, 10, 11, ... N zeitlich verzögert aktiviert bzw. freigeschaltet. Zu einem ersten Zeitpunkt fließt wegen der nur zum Teil freigeschalteten Senkenmodule 9, 10, 11, ... N nur ein geringer Laststrom, welchen die jeweiligen Lastverteilungs-Controller 3 der Quellenmodule 4, 5, 6 mittels eines jeweiligen Messwiderstandes 7 erfassen. Aufgrund der zu diesem ersten Zeitpunkt geringen Last und des dadurch geringen Laststroms können die Lastverteilungs-Controller 3 der Quellenmodule 4, 5, 6 nicht sicherstellen, die jeweils auf die Nennleistung bezogene Lastverteilung zu symmetrieren, um zu bewirken, dass jedes der Quellenmodule 4, 5, 6 prozentual gleich ausgelastet ist.

Für den Fall, dass im Rahmen des weiteren Hochlaufs des Automatisierungsgerätes zu einem dem ersten Zeitpunkt folgenden weiteren Zeitpunkt der Laststrom sprungartig ansteigt, weil z. B. alle Senkenmodule 9, 10, 11, ... N mit elektrischer Energie zu versorgen sind, bricht die vom Quellenmodul 6 erzeugte 15 V-Versorgungsspannung kurzzeitig ein; denn die Quellenmodule 4, 5 sind noch im Sleep-Modus, weil deren Lastverteilungs-Controller 3 nur verzögert bewirken können, diesen Sleep-Modus zu verlassen, damit die Quellenmodule 4, 5 zusammen mit dem Quellenmodul 6 die erforderliche Leistung bereitstellen können. Mit anderen Worten: Nur verzögert können die Lastverteilungs-Controller 3 aller Quellenmodule 4, 5, 6 sicherstellen, die jeweils auf die Nennleistung bezogene Lastverteilung zu symmetrieren, um zu bewirken, dass jedes Quellenmodul 4, 5, 6 prozentual gleich ausgelastet ist.

Um einen derartigen Einbruch der 15 V-Versorgungsspannung während des Hochlaufs des Automatisierungsgerätes weitgehend zu verhindern, wird sichergestellt, dass im Rahmen dieses Hochlaufs das für eine höhere Leistungsabgabe ausgebildete 60 W-Quellenmodul 4 aktiv - also nicht im Sleep-Modus - ist, wodurch dieses Quellenmodul 4 als erstes der drei Quellenmodule 4, 5, 6 für die Energieversorgung der Senkenmodule bereitsteht. Dazu ist das 60 W-Quellenmodul 4 derart ausgebildet, dass dieses eine höhere Ausgangsspannung bereitstellt als die der beiden Quellenmodule 5, 6.

In einem praktischen Ausführungsbeispiel der Erfindung ist vorgesehen, dass das 60 W-Quellenmodul 4 eine Ausgangsspannung von 15,2 V bereitstellt, mit welcher das Quellenmodul 4 die Potentialleitungen P1, P2 beaufschlagt. Diese Ausgangsspannung von 15,2 V ist so gewählt, dass unter Berücksichtigung von Spannungstoleranzen der Quellenmodule 4, 5, 6 diese Ausgangsspannung über der von dem jeweiligen Quellenmodul 5, 6 erzeugten Ausgangsspannung liegt. Die Ausgangsspannung des 60 W-Quellenmodul 4 ist so gewählt, dass die Differenz zwischen der Ausgangsspannung des 60 W-Quellenmoduls 4 und der Ausgangsspannung des 40 W-Quellenmoduls 5 sowie die Differenz zwischen der Ausgangsspannung des 60 W-Quellenmoduls 4 und der Ausgangsspannung des 10 W-Quellenmoduls 6 nicht größer sind als der Ausregelbereich der Lastverteilungs-Controller 3, welche die Lastverteilung regeln. Dadurch, dass das für eine höhere Leistungsabgabe ausgebildete Quellenmodul 4 nicht im Sleep- bzw. Standby-Betrieb arbeitet, kann dieses Quellenmodul 4 einen Lastsprung im Wesentlichen "abfangen"; ein Einbrechen der Ausgangsspannung wird weitgehend verhindert und es ist sichergestellt, dass alle Senkenmodule weitgehend "ohne Probleme" aktiviert werden können und das Automatisierungsgerät störungsfrei hochlaufen kann.

Die Einstellung der Ausgangsspannung auf 15,2 V wird mit einfachen schaltungstechnischen Maßnahmen (Figur 3) verwirklicht, die Bestandteil des DC/DC-Wandlers 8 des Quellenmoduls 4 sind. Dazu wird das Verhältnis der Widerstandswerte von Widerständen R1, R2 entsprechend gewählt, um die Ausgangsspannung auf 15,2 V vorzugeben. Entsprechend werden mittels dieser schaltungstechnischen Maßnahmen für das 40 W-Quellenmodul 5 eine 15 V-Ausgangsspannung und für das 10 W-Quellenmodul 6 eine 14,7 V-Ausgangsspannung eingestellt bzw. vorgegeben.

**Patentansprüche**

1. utomatisierungsgerät mit

    - an eine Versorgungsleitung (P1, P2) angeschlossenen Senkenmodulen (9, 10, 11, ... N),
    - mindestens zwei parallel geschalteten Quellenmodulen (4, 5, 6) zur Versorgung der Senkenmodule (9, 10, 11, ... N) mit elektrischer Energie, wobei

        - jedes der mindestens zwei Quellenmodule zur Beaufschlagung der Versorgungsleitung (P1, P2) mit einer Ausgangsspannung vorgesehen ist,
        - die mindestens zwei Quellenmodule (4, 5, 6) Mittel zur Symmetrierung eines auf eine Nennleistung des jeweiligen Quellenmoduls (4, 5, 6) bezogenen prozentualen Auslastungsgrades (L) aufweisen, und
        - eines der mindestens zwei Quellenmodule (4, 5, 6) für eine höhere Leistungsabgabe und das andere der mindestens zwei Quellenmodule (4, 5, 6) für eine niedrigere Leistungsabgabe vorgesehen ist,

    **dadurch gekennzeichnet, dass**
    das für die höhere Leistungsabgabe vorgesehene Quellenmodul (4) eine größere Ausgangsspannung bereitstellt als das für die niedrigere Leistungsabgabe vorgesehene Quellenmodul (5, 6).

## FIG 1

## FIG 3

FIG 2

Europäisches
Patentamt

European
Patent Office

Office européen
des brevets

## EUROPÄISCHER RECHERCHENBERICHT

Nummer der Anmeldung

EP 13 16 9303

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/208824 A1 (GREENING THOMAS CHARLES [US] ET AL) 20. August 2009 (2009-08-20) * Absatz [0013] - Absatz [0047]; Abbildung 1 * | 1 | INV. G05B15/02 H02J1/10 |
| | ----- | | |
| X | DE 10 2006 001984 A1 (BOSCH GMBH ROBERT [DE]) 19. Juli 2007 (2007-07-19) * Absatz [0007] - Absatz [0033]; Abbildung 1 * | 1 | |
| | ----- | | |

RECHERCHIERTE SACHGEBIETE (IPC)

G05B
H02J

Der vorliegende Recherchenbericht wurde für alle Patentansprüche erstellt

| Recherchenort | Abschlußdatum der Recherche | Prüfer |
|---|---|---|
| Den Haag | 24. Juli 2013 | Patsiopoulos, N |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 16 9303

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-07-2013

| Im Recherchenbericht angeführtes Patentdokument | Datum der Veröffentlichung | Mitglied(er) der Patentfamilie | Datum der Veröffentlichung |
|---|---|---|---|
| US 2009208824 A1 | 20-08-2009 | CN 101946222 A<br>EP 2238524 A2<br>KR 20100102220 A<br>US 2009208824 A1<br>US 2012176098 A1<br>WO 2009102552 A2 | 12-01-2011<br>13-10-2010<br>20-09-2010<br>20-08-2009<br>12-07-2012<br>20-08-2009 |
| DE 102006001984 A1 | 19-07-2007 | DE 102006001984 A1<br>EP 1980004 A2<br>US 2010007207 A1<br>WO 2007082850 A2 | 19-07-2007<br>15-10-2008<br>14-01-2010<br>26-07-2007 |

EPO FORM P0461

Für nähere Einzelheiten zu diesem Anhang : siehe Amtsblatt des Europäischen Patentamts, Nr.12/82